# EUROPEAN PATENT APPLICATION

(11) **EP 2 762 356 A1**
(43) Date of publication of application: **06.08.2014**
(21) Application number: 14153295.2
(22) Date of filing: 30.01.2014
(51) Int. Cl.: B60P 3/22

(54) **Pump unit for a vehicle tanker**

(30) Priority: 30.01.2013 NL 2010205
(71) Applicant: Scheggetman Beheer B.V., 7245 RK Laren (Gld) (NL)
(72) Inventor: Scheggetman, Willem Dinant, 7245 RK Laren (Gld) (NL)
(74) Representative: Louwaard, Jan-Willem Paul

(57) **Abstract**

The present invention relates to a pump unit for a tanker device, such as a vehicle tanker or a stationary storage tank. The pump unit according to the invention comprises a frame (11), a pump device (13) arranged on the frame and comprising a pump for connecting to a tank (5) of the tanker device for the purpose of pumping tank content into and/or out of the tank, and an autonomous drive configured to drive the pump.

## Description

The present invention relates to a pump unit for a vehicle tanker.

Vehicle tankers provided with pump units are known, for instance for transporting milk from a dairy farm to a dairy plant. When milk is collected from the dairy farm a pump of the pump unit is connected to a storage tank at the dairy farm. Milk stored in the storage tank is then pumped from the storage tank into the tank of the vehicle tanker by means of the pump.

The present invention has for its object to improve the known pump units.

A pump unit according to the present invention comprises for this purpose:
- a frame;
- a pump device arranged on the frame and comprising a pump for connecting to a tank of the tanker device for the purpose of pumping tank content into and out of the tank; and
- an autonomous drive configured to drive the pump.

Owing to the autonomous drive for the pump it is possible to drive the pump without making use of the main drive of the tractor unit of the vehicle tanker used to displace the vehicle tanker. This has the advantage that a drive specially configured to drive the pump can be used to drive the pump, for instance a drive which is more efficient than the main drive of the tractor unit in the power range required for pump driving. There is the additional advantage that no provisions need be made for transmitting power from the main drive of the tractor unit to the pump, such as arranging hydraulic conduits from the tractor unit and along the vehicle tanker to the pump unit. A vehicle tanker can thus be provided with a pump unit in simple manner, and any tractor unit which is able to draw the vehicle tanker can be used to displace the vehicle tanker. It is noted here that the present invention is also suitable for application in self-propelled vehicle tankers and stationary storage tanks.

In the pump unit according to the invention the pump device arranged on the frame comprises the autonomous drive configured for driving the pump.

Placing the pump and the autonomous drive on one frame makes it possible to provide a vehicle tanker with a pump unit in exceptionally simple manner without considerable modifications to the vehicle tanker or the storage tank.

The pump unit according to the invention further comprises a coupling device configured for releasable coupling of the frame to the tanker device. This for instance makes it possible to use one pump device on several vehicle tankers. A vehicle tanker utilized at any given moment for transport for which a pump device is not required does not then travel around unnecessarily with a pump device. In the case a pump device malfunctions it is also possible to replace the malfunctioning pump device with a pump device which does operate and to then repair the malfunctioning pump device while the vehicle tanker remains available for use owing to the operative pump device. The coupling device is preferably of the rapid-action coupling type, so that in a short time and with relatively few means the frame with the pump device can be uncoupled from or coupled to a vehicle tanker.

The coupling device of the pump unit according to the invention comprises:
- a first coupling part arranged on the frame; and
- a second coupling part for arranging fixedly on the tanker device;
   wherein
- the first coupling part and the second coupling part comprise co-acting coupling members configured for releasable coupling of the first coupling part and the second coupling part.

This makes it possible to make a vehicle tanker suitable in simple manner for releasable coupling of the frame of the pump unit thereto by connecting the second coupling part fixedly to the vehicle tanker, in particular the chassis of the vehicle tanker. The coupling members are preferably of the rapid-action coupling type.

In the case of the pump unit according to the invention the second coupling part is configured so as to be arranged on a chassis part of a vehicle tanker, or the second coupling part is integrated into a chassis part of a vehicle tanker.

In a vehicle tanker the tank is positioned on a chassis on which wheels of the vehicle tanker are arranged. This chassis is strong enough to mount the frame of the pump unit thereon, so that the tank itself for instance need not be reinforced in order to mount a pump unit according to the invention on the vehicle tanker. This has the advantage that an already existing vehicle tanker can be provided in simple manner with a pump unit according to the invention without reinforcement of the tank.

In a particularly favourable embodiment of the pump unit according to the invention the first coupling part is arranged on a side of the frame on the underside of the pump unit. This makes it possible for the underside of the pump unit in the coupled situation to be positioned adjacently of the chassis part and below the bottom of the tank. This has the advantage that the pump device can be positioned at least partially below the bottom of the tank positioned on the chassis part so that the least possible power is required to drive the pump device when a substance such as milk is pumped into the tank of the vehicle tanker. Positioning the pump unit as close as possible to the ground also has the advantage that during coupling or uncoupling of the frame the frame need only be lifted over a short distance. Positioning the pump unit relatively close to the ground does however mean that the pump unit is positioned at bumper height and may be struck in the case of a collision between a vehicle and the vehicle tanker. Because the frame is coupled to a chassis part in the case of the pump unit according to the invention, it is possible in case of a collision that collision forces not absorbed by the frame are transmitted to the robust chassis part. The tank is thus spared in a possible collision and requires no reinforcement. The pump unit thus functions here as a bumper. This does not however mean that the pump unit (wholly) fulfils the bumper function for a vehicle tanker in compliance with the traffic regulations in force in a relevant country. It is thus possible that traffic regulations in force in a relevant country allow the pump unit to be positioned at bumper height and to be struck first in the case of a collision, while the traffic rules do not consider the pump unit a bumper but for instance a rearward protruding load. In such a case a bumper member has to be arranged for instance on the chassis part between the pump unit and the chassis part, this bumper member then being the bumper of the vehicle tanker in accordance with the applicable traffic regulations. The pump unit in this case need not have its own bumper member and a force-transmitting construction connecting the bumper member to the chassis, or at least not a bumper member and a force-transmitting construction having a strength complying with the applicable legal requirements.

In a favourable embodiment the coupling members comprise:
- a hooking member which is arranged on one of the first coupling part and second coupling part and a coupling member which is arranged on the other of the first coupling part and second coupling part, and with which the hooking member can be brought into hooking engagement so that the first coupling part can be coupled to and uncoupled from the second coupling part by means of a hooking movement.

The use of a hooking member and a coupling member such as a hook-on shaft co-acting therewith enables a simple and robust coupling which can be rapidly disconnected and reconnected by means of a hooking movement.

In a favourable embodiment of the pump unit according to the invention the autonomous drive comprises a combustion engine. Using a combustion engine, particularly in combination with a fuel tank arranged on the frame, it is easily possible to realize that power is available for a long period without the need for refuelling. Alternatively, an electric motor in combination with a battery arranged on the frame is possible instead of a combustion engine.

In a favourable embodiment of the pump unit according to the invention with a combustion engine an electric or hydraulic transmission is provided for the purpose of transmitting power from the combustion engine to the pump. This for instance allows freedom of design in the positioning of the combustion engine relative to the pump. An electric transmission comprises a generator which is connected to the combustion engine and which supplies power to an electric motor connected to the pump. A hydraulic transmission comprises a hydraulic pump which is connected to the combustion engine and which drives via hydraulic conduits a hydraulic motor connected to the pump. A direct transmission from the combustion engine to the pump is alternatively possible.

A further favourable embodiment of the pump unit according to the invention also comprises a lifting device for lifting and lowering the frame.

Particularly in the case of a vehicle tanker this measure makes it possible to bring the frame in lowered position close to the ground during pumping so that the power required for the pumping can be limited, and to carry the frame in lifted position further from the ground during travel with the vehicle tanker so that the chance of the frame striking an obstacle can be reduced. The lifting device is preferably integrated into the coupling device.

In a further favourable embodiment of the pump unit according to the invention a bumper member is arranged on the frame and the frame comprises a force-transmitting construction connected to the bumper member for the purpose of transmitting collision forces exerted on the bumper member to the tanker device when the pump unit is coupled to the vehicle tanker. This makes it possible for the pump unit to also fulfil a bumper function and to thereby be suitable for application on a vehicle tanker not specifically designed for arranging of a pump unit thereon.

In a favourable embodiment of the pump unit with bumper member the bumper member is arranged on a side of the frame remote from the coupling device. This makes the pump unit suitable for coupling to the rear of the vehicle tanker as seen in travel direction of the vehicle tanker.

In a further favourable embodiment of the pump unit according to the invention the pump device is provided on a first functional end thereof with a pump coupling for coupling the pump device to a supply and/or discharge opening in the tank of the vehicle tanker, and the pump coupling is positioned on a side of the pump unit so that it is accessible from outside the pump unit. This makes it possible to uncouple the pump device easily and quickly from the tank of the vehicle tanker before the frame is uncoupled from the vehicle tanker.

In a further favourable embodiment of the pump unit according to the invention the pump is positioned close to the underside of the pump unit. This contributes toward limiting the power necessary to drive the pump when pumping a substance such as milk into the tank of the vehicle tanker.

In a further favourable embodiment of the pump unit according to the invention the pump device is provided on a second functional end with a hose reel with hose, wherein the hose reel is positioned close to the underside of the pump unit. This contributes toward limiting the power necessary to drive the pump. This latter particularly in combination with the measure that the pump is positioned close to the underside of the pump unit.

In a further embodiment of the pump unit according to the invention the pump device also comprises a venting system. This enables venting of the pumped substance before it is carried into the tank, for instance to enable a reliable measurement of the substance carried into the tank.

In a further embodiment of the pump unit according to the invention the pump unit comprises a housing in which the pump device is arranged. It is particularly advantageous for this housing to be embodied in a plastic material, for instance a fibre-reinforced plastic material. This makes it possible to limit the weight of the pump unit. It is also possible to embody the frame in a plastic material.

In a further embodiment of the pump unit according to the invention the pump device is provided with a communication system configured for wireless transmission and/or reception of data relating to the operation of the pump device. This makes it possible to exchange data with the pump unit from for instance the driver's cab of the tractor unit without a wired communication connection having to be provided between the driver's cab and the pump unit.

The present invention also relates to an assembly of a tanker device, in particular a vehicle tanker, and a pump unit according to the invention as described above, wherein the second coupling part is arranged on a chassis part of the vehicle tanker or wherein the second coupling part is integrated into a chassis part of the vehicle tanker.

In a favourable embodiment of the assembly according to the invention the tanker device is a vehicle tanker and the pump unit is arranged on the rear of the vehicle tanker as seen in travel direction of the vehicle tanker.

In a favourable embodiment hereof the underside of the pump unit is positioned in the coupled situation below the bottom of the tank.

In a further favourable embodiment of the assembly according to the invention with a pump unit as described above provided with a coupling device with a first coupling part and a second coupling part wherein the first coupling part is arranged on the frame, the second coupling part is arranged fixedly on the tanker device. In a favourable embodiment hereof the second coupling part is arranged on a chassis part of a vehicle tanker. This latter enables an exceptionally robust coupling of the frame to a vehicle tanker. In a particular embodiment the second coupling part is integrated into the chassis part.

In a favourable embodiment of the assembly according to the invention with a pump unit as described above provided with a coupling device with a first coupling part and a second coupling part wherein the second coupling part is arranged fixedly on the tanker device, the assembly also comprises a bumper device provided with a bumper member and coupling members which can be brought into engagement with the second coupling part. This makes it possible to provide the vehicle tanker with a bumper member when the frame is uncoupled.

In a further favourable embodiment of the assembly according to the invention the supply and/or discharge opening in the tank of the tanker device is positioned on a side of the tank, preferably close to the pump coupling of the pump device. This makes it possible that, for the purpose of coupling and uncoupling the tank to and from the pump device, the supply and/or discharge opening in the tank of the tanker device are easily accessible and the relatively vulnerable connecting hose for connecting the pump device to the supply and/or discharge opening in the tank of the tanker device can moreover be relatively short.

The present invention will be further elucidated hereinbelow on the basis of an exemplary embodiment which is shown schematically in the accompanying figures. This is a non-limitative exemplary embodiment. In the figures:
Figures 1, 2 and 3 show a side, rear and top view with partially cut-away parts of an assembly according to the invention of a pump unit and a tanker device embodied as vehicle tanker in a coupled situation;
Figure 4 shows a side view with partially cut-away parts of the assembly of figures 1, 2 and 3 in uncoupled situation;
Figure 5 shows a side view of the vehicle tanker of figure 4.

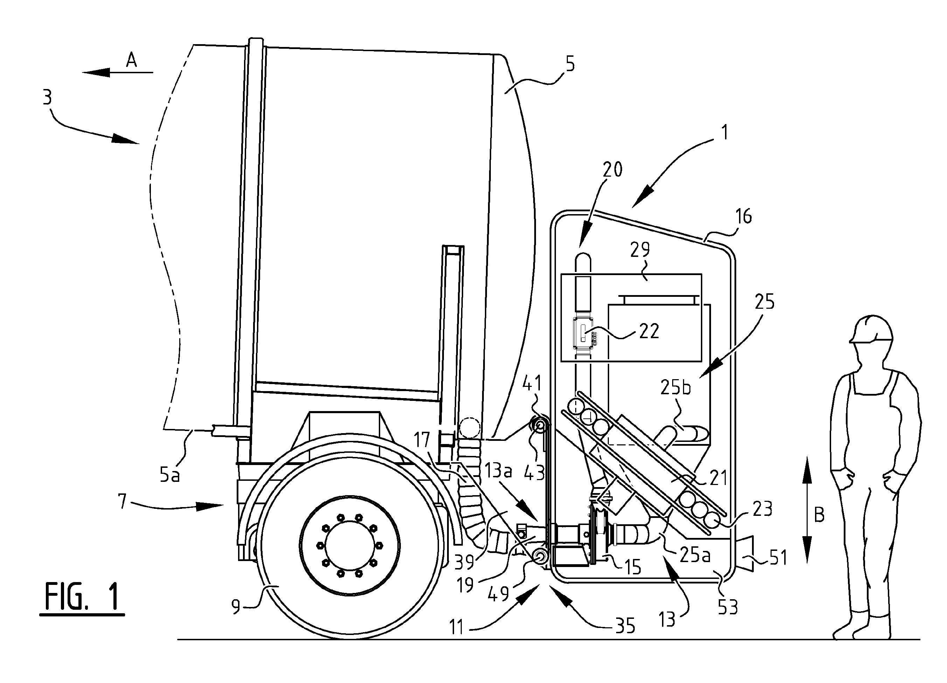

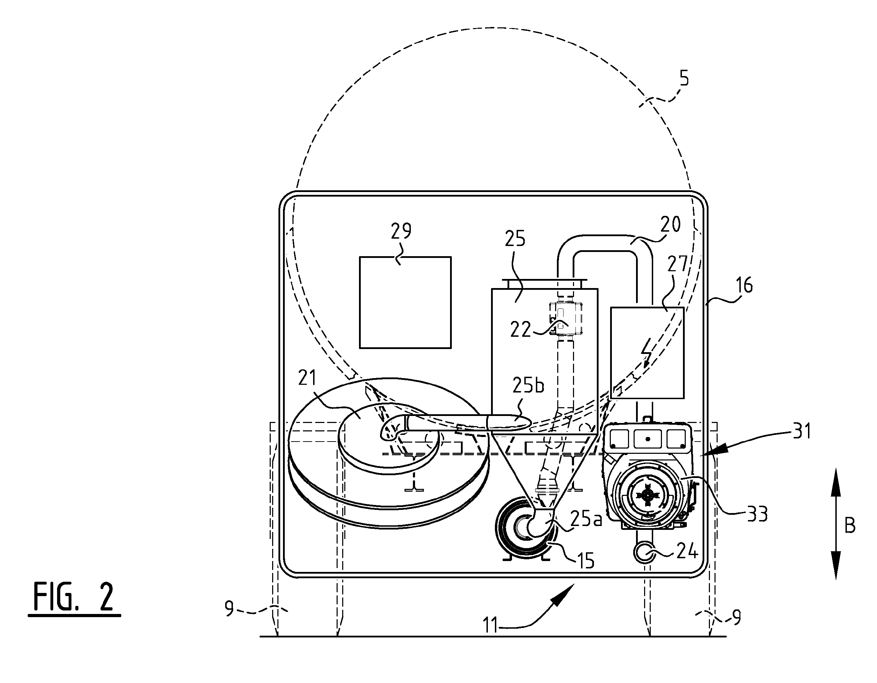

Figures 1, 2 and 3 show three views of a pump unit 1 arranged on a vehicle tanker 3. Particularly shown is an assembly of a pump unit 1 and a tanker device embodied as vehicle tanker 3.

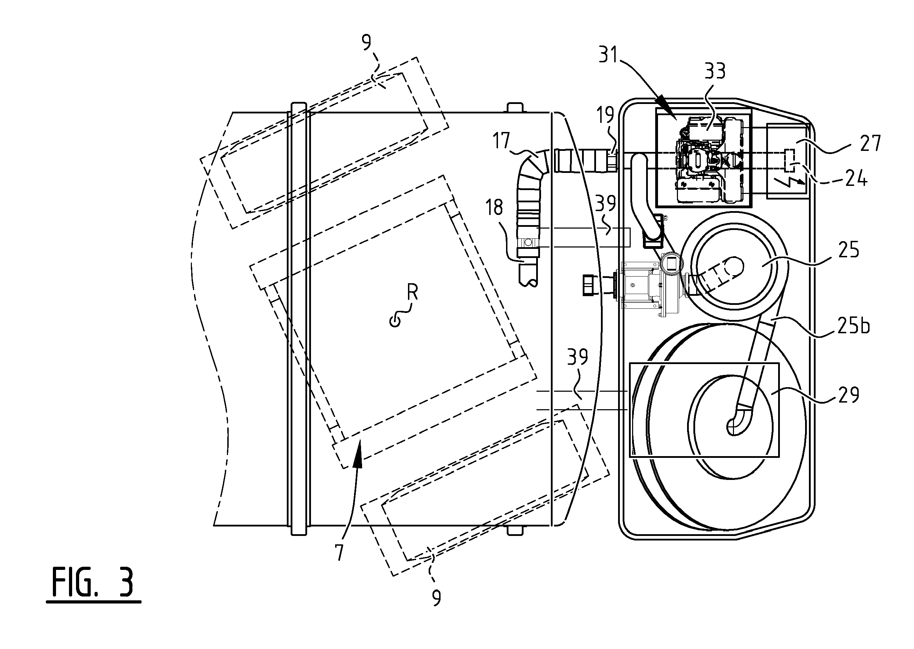

These figures show only the rear of vehicle tanker 3 as seen in travel direction A of the vehicle tanker. A tank 5 of vehicle tanker 3 is visible in figure 1. This is a self-supporting tank, wherein tank 5 carries a chassis part 7 on which wheels 9 are arranged. As shown in figure 3, chassis part 7 is configured such that the wheels are rotatable around rotation axis R relative to tank 5. Alternative chassis/tank constructions are also possible.

Pump unit 1 has a frame 11 with a pump device 13 arranged thereon. Pump device 13 is arranged in a volume 17 enclosed by a housing 16, which housing 16 is arranged on frame 11.

Pump device 13 has a pump 15. Pump 15 is connected via a connecting hose 17 to the inner volume of tank 5 for the purpose of pumping the tank content, such as milk or other at least partially fluid substance such as manure, chocolate, whey and so on, into and/or out of tank 5.

Pump device 13 is provided on one functional end 13a thereof, either the inlet or outlet of pump device 13 depending on the pumping direction, with a pump coupling 19 positioned on the front side of pump unit 1 as seen in travel direction A of the vehicle tanker. In figures 1, 2 and 3 connecting hose 17 is coupled with one end thereof to pump coupling 19. Pump coupling 19 is positioned such that connecting hose 17 is accessible from outside pump unit 1, in particular from outside the volume 17 enclosed by housing 16, so as to enable simple disconnection and reconnection of connecting hose 17. Figure 3 in particular shows schematically that connecting hose 17 is coupled with the second end thereof to a supply and/or discharge opening 18 in tank 5 of vehicle tanker 3. The supply and/or discharge opening 18 in tank 5 is positioned on a side of the tank close to pump coupling 19 of pump device 13. The supply and/or discharge opening 18 is oriented transversely relative to the longitudinal axis of the vehicle tanker.

Pump 15 is connected to pump coupling 19 via a pump conduit 20 in which is received a measuring unit 22 for measuring the quantity of substance pumped to tank 5. As shown, an additional supply/discharge conduit 24 is also provided which can be placed by means of a valve (not further shown) in open connection with the inner volume of tank 5 via connecting hose 17. It is possible via this supply/discharge conduit 24 to carry substance into or remove it from tank 5 while bypassing pump device 13.

In addition to pump 15, pump device 13 also has a hose reel 21 with hose 23. Hose 23 is operatively connected with one end thereof to pump 15 via a venting system 25. For this purpose venting system 25 is operatively connected with a first connection 25a to pump 15 and operatively connected with a second connection 25b to hose reel 21 with hose 23. The other end of hose 23 is provided with a hose coupling configured for coupling to a supply and/or discharge opening of an external storage installation. Hose reel 21 and hose 23 form here the second functional end of pump device 13.

As shown in figures 1, 2 and 3, the pump 15, hose reel 21 with hose 23 and connections 25a and 25b of the venting system are positioned close to the underside of pump unit 1, whereby the energy required to pump tank content through pump device 13 from an external storage installation to tank 5 of vehicle tanker 3 is limited. Also shown in figures 1, 2 and 3 is that frame 11 is positioned relative to the bottom 5a of tank 5 such that pump 15, hose reel 21 with hose 23 and connections 25a and 25b of venting system 25 are positioned for the most part below bottom 5a of tank 5, whereby the total power required to pump tank content from an external storage installation to tank 5 of vehicle tanker 3 is limited. Further components of pump device 13, such as a control module 27 and a sampling module 29, are positioned more in the direction of the upper side of pump unit 1.

Pump device 13 is also provided with an autonomous drive 31 positioned on frame 11 and configured to drive pump 15. Autonomous drive 31 is shown with a combustion engine 33, for instance a diesel engine. Combustion engine 33 is connected to a hydraulic transmission in the form of a hydraulic pump which is connected to the crankshaft of combustion engine 33 and which is connected by means of a hydraulic conduit and valve system to a hydraulic motor on pump 15. Power can be transmitted from combustion engine 33 to pump 15 by means of this transmission for the purpose of driving pump 15. A fuel tank is also arranged on the frame so that the combustion engine can function autonomously.

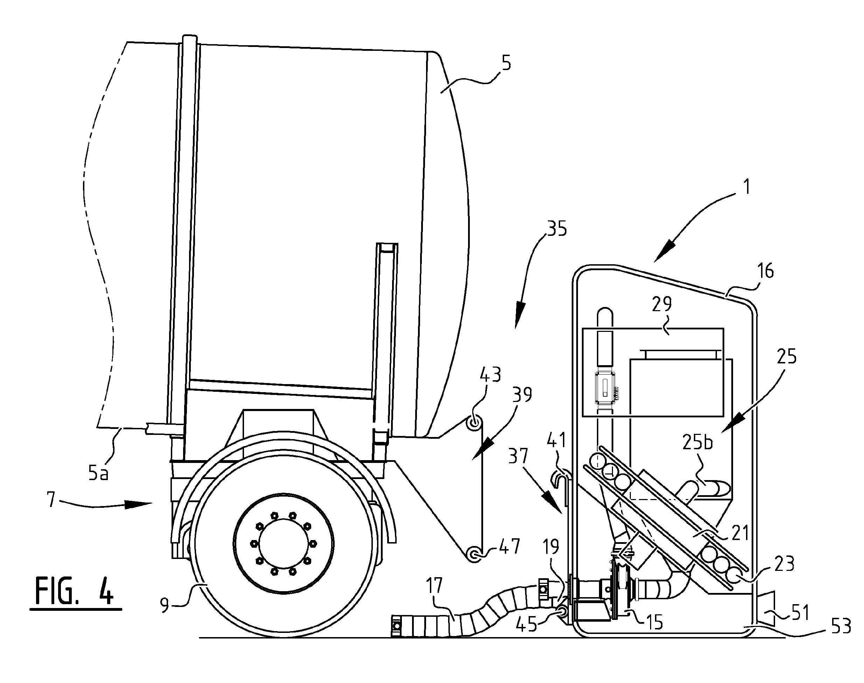

Frame 11 of pump unit 1 is coupled releasably to vehicle tanker 3 by means of a coupling device 35 so that, as shown in figure 4, frame 11 with pump device 13 thereon, i.e. frame 11 having thereon pump 15, hose reel 21 with hose 23, venting system 25 and autonomous drive 31, are releasable from vehicle tanker 3.

In order to make this release possible the coupling device 35 has a first coupling part 37 arranged on frame 11 and a second coupling part 39 arranged fixedly on vehicle tanker 3. First coupling part 37 and second coupling part 39 are shown with co-acting coupling members 41, 43, 45, 47 which are configured for releasable coupling of first coupling part 37 and second coupling part 39. As shown in figures 1 and 4, the first coupling part arranged on frame 11 is provided with a coupling member in the form of a hooking member 41 which can be brought into hooking engagement with a co-acting coupling member on second coupling part 39 in the form of a hook-on shaft 43. When hooking member 41 has been brought into engagement with hook-on shaft 43, frame 11 hangs from second coupling part 39 and, via this second coupling part 39, from vehicle tanker 3. A coupling member embodied as first securing lug 45 on first coupling part 37 and a coupling member embodied as second securing lug 47 on second coupling part 39 can then be coupled by means of a locking pin 49 so that frame 11 is coupled to vehicle tanker 3. From the coupled situation as shown in figure 1, and following release of connecting hose 17 from tank 5 and release of locking pin 49, and thereby uncoupling of securing lugs 45, 47, frame 11 can be released easily and quickly from vehicle tanker 3 with an unhooking movement. The shown coupling device with hooking member and locking pin is a coupling device of the rapid-action coupling type. The result is the uncoupled situation as shown in figure 4.

Second coupling part 39 is connected fixedly to chassis part 7 of vehicle tanker 3.

It is possible to provide pump unit 1 with a lifting device (not shown) which is integrated for instance into coupling device 35 and with which frame 13 and the pump device arranged thereon can be lifted or lowered in the direction of arrows B.

As shown in figures 1-4, a bumper member 51 is arranged on frame 11 on a side of frame 11 remote from coupling device 35. This bumper member 51 is connected to a force-transmitting construction 53 of frame 11. This force-transmitting construction is configured to transmit collision forces exerted on bumper member 51 to the vehicle tanker when the pump unit is coupled to the vehicle tanker. The force-transmitting construction 53 transmits force particularly to chassis part 7 of vehicle tanker 3 via the first and second coupling parts 37, 39.

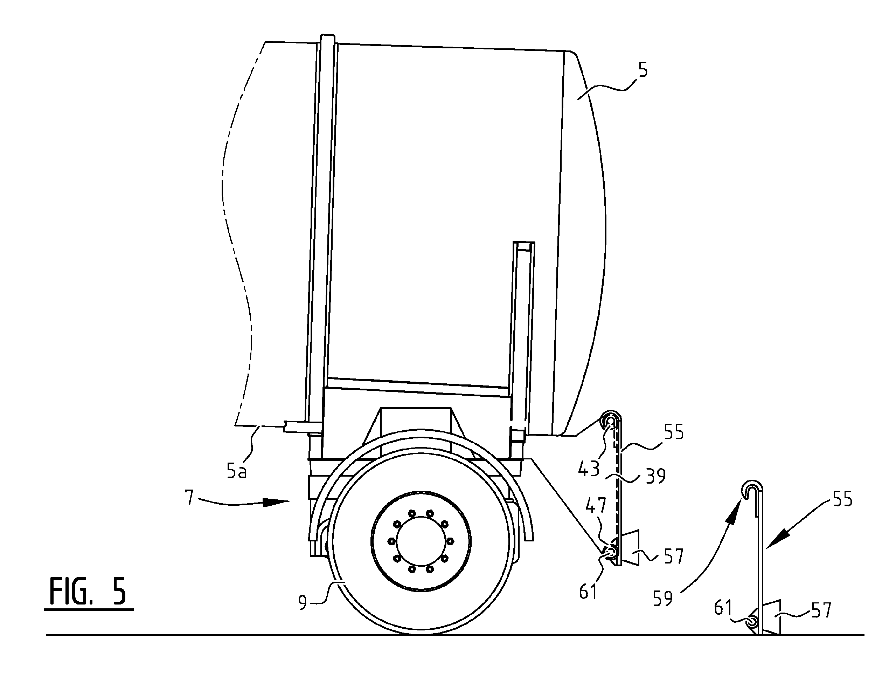

From the uncoupled situation as shown in figure 4 a bumper device 55 provided with a bumper member 57, which takes over the bumper function from the uncoupled frame 11, can be coupled as shown in figure 5 to the second coupling part 39 fixedly connected to chassis part 7 of vehicle tanker 3. This bumper device 55 is provided with coupling members in the form of a hooking member 59 and securing lug 61 which can be brought into engagement with hook-on shaft 43 and securing lug 47 of second coupling part 39. The pump unit according to the invention can also be embodied without bumper member.

The present invention is not limited to the shown embodiment but also extends to other embodiments falling within the scope of the appended claims.

## Claims

1. Pump unit for a vehicle tanker,
comprising:
- a frame;
- a pump device arranged on the frame and comprising a pump for connecting to a tank of the tanker device for the purpose of pumping tank content into and out of the tank and an autonomous drive configured to drive the pump;
- a coupling device configured for releasable coupling of the frame to the tanker device;
wherein the coupling device comprises:
- a first coupling part arranged on the frame; and
- a second coupling part for arranging fixedly on the tanker device;
wherein
- the first coupling part and the second coupling part comprise co-acting coupling members configured for releasable coupling of the first coupling part and the second coupling part; and
- the second coupling part is configured so as to be arranged on a chassis part of a vehicle tanker, or wherein the second coupling part is integrated into a chassis part of a vehicle tanker.

2. Pump unit as claimed in claim 1, wherein the coupling device is of the rapid-action coupling type, and wherein the coupling members preferably comprise:
- a hooking member which is arranged on one of the first coupling part and second coupling part and a coupling member which is arranged on the other of the first coupling part and second coupling part and with which the hooking member can be brought into hooking engagement so that the first coupling part can be coupled to and uncoupled from the second coupling part by means of a hooking movement.

3. Pump unit as claimed in claim 1 or 2,
wherein
- the first coupling part is arranged on a side of the frame on the underside of the pump unit.

4. Pump unit as claimed in any of the foregoing claims, wherein
- the autonomous drive comprises a combustion engine,
wherein preferably
- an electric or hydraulic transmission is provided for the purpose of transmitting power from the combustion engine to the pump.

5. Pump unit as claimed in any of the foregoing claims, also comprising:
- a lifting device for lifting and lowering the frame, wherein the lifting device is preferably integrated into the coupling device.

6. Pump unit as claimed in any of the foregoing claims, wherein
- a bumper member is arranged on the frame and the frame comprises a force-transmitting construction connected to the bumper member for the purpose of transmitting collision forces exerted on the bumper member to the tanker device when the pump unit is coupled to the tanker device,
wherein preferably
- the bumper member is arranged on a side of the frame remote from the coupling device.

7. Pump unit as claimed in any of the foregoing claims, wherein
- the pump device is provided on a first functional end thereof with a pump coupling for coupling the pump device to a supply and/or discharge opening in the tank of the tanker device; and
- the pump coupling is positioned on a side of the pump unit so that it is accessible from outside the pump unit.

8. Pump unit as claimed in any of the foregoing claims, wherein
- the pump is positioned close to the underside of the pump unit.

9. Pump unit as claimed in any of the foregoing claims, wherein
- the pump device is provided on a second functional end with a hose reel with hose, wherein the hose reel is positioned close to the underside of the pump unit.

10. Pump unit as claimed in any of the foregoing claims, wherein
- the pump device also comprises a venting system.

11. Pump unit as claimed in any of the foregoing claims, wherein
- the pump unit comprises a housing in which the pump device is arranged, wherein the housing is preferably of a plastic material, preferably a fibre-reinforced plastic material.

12. Pump unit as claimed in any of the foregoing claims, wherein the pump device is provided with a communication system configured for wireless transmission and/or reception of data relating to the operation of the pump device.

13. Assembly of a vehicle tanker and a pump unit as claimed in any of the claims 1 to 12, wherein the second coupling part is arranged on a chassis part of the vehicle tanker or wherein the second coupling part is integrated into a chassis part of the vehicle tanker.

14. Assembly as claimed in claim 13,
wherein
- the pump unit is arranged on the rear of the vehicle tanker as seen in travel direction of the vehicle tanker,
wherein preferably, in the coupled situation,
- the underside of the pump unit is positioned below the bottom of the tank.

15. Assembly as claimed in claim 13 or 14, also comprising a bumper device provided with a bumper member, and coupling members which can be brought into engagement with the second coupling part.
